# EUROPEAN PATENT SPECIFICATION

(11) **EP 4 005 909 B1**
(45) Date of publication and mention of the grant of the patent: **28.02.2024**
(21) Application number: 20858191.8
(22) Date of filing: 28.08.2020
(51) Int. Cl.: B62J 17/06, B62K 5/10, B62J 17/086, B62J 25/04, B62K 5/05, B62K 5/06, B62K 5/08, B62J 17/10

(54) **LEANING VEHICLE**
NEIGEFAHRZEUG
VÉHICULE INCLINABLE

(30) Priority: 30.08.2019 JP 2019158756
(43) Date of publication of application: 01.06.2022
(73) Proprietor: Yamaha Hatsudoki Kabushiki Kaisha, Iwata-shi, Shizuoka 438-8501 (JP)
(72) Inventor: HIRAYAMA Yosuke, Iwata-shi, Shizuoka 438-8501 (JP)
(74) Representative: Stöckeler, Ferdinand
(86) International application number: PCT/JP2020/032677
(87) International publication number: WO 2021/039991

(56) References cited:
- EP-A1- 3 360 764
- EP-A1- 3 381 778
- WO-A1-2014/145878
- WO-A1-2017/086350
- DE-U1-212014 000 042
- JP-A- 2009 083 652
- JP-A- 2017 047 752
- US-A1- 2012 267 870
- US-A1- 2016 229 249
- US-A1- 2017 008 591
- US-B2- 8 583 325
- US-B2- 8 662 228
- "MWC-4", YAMAHA MOTOR CO., LTD., 2017, XP055796412, Retrieved from the Internet: URL:https://global.yamaha-motor.com/about/ design/concept/mwc4 [retrieved on 2020-10-07]

## Description

### TECHNICAL FIELD

The present teaching relates to a leaning vehicle.

### BACKGROUND ART

A known leaning vehicle is configured to lean leftward when turning to the left and lean rightward when turning to the right. As such a leaning vehicle, Patent Document 1 discloses a leaning vehicle including a leaning driving mechanism that controls leaning of the vehicle in the left direction or in the right direction.

The leaning vehicle disclosed in Patent Document 1 includes a vehicle body, a left wheel located at the left of the vehicle body, a right wheel located at the right of the vehicle body, a leaning mechanism, and a leaning driving mechanism. The leaning mechanism includes support arms that support the left wheel and the right wheel and are supported by the vehicle body to be rotatable around a rotation shaft core extending in the front-rear direction of the vehicle body. The leaning driving mechanism includes a driving source that generates a driving force for rotating the support arms to the vehicle body.

The leaning driving mechanism causes the support arms of the leaning mechanism to rotate by a driving force generated by the driving source to thereby move the left wheel and the right wheel upward or downward. In this manner, leaning of the leaning vehicle in the left direction or in the right direction can be controlled.

### CITATION LIST

### PATENT DOCUMENT

Patent Document 1: International Patent Application Publication No. 2017/082424

### SUMMARY OF INVENTION

In the leaning vehicle including the lean actuator for controlling leaning of the vehicle in the left direction or in the right direction as disclosed in Patent Document 1, the lean actuator is disposed further rearward than the left front wheel at the left of the vehicle main body and the right front wheel at the right of the vehicle main body. Thus, it is required for the leaning vehicle to have a vehicle body structure capable of protecting the lean actuator against stones, sand, dust, rainwater, and so forth whirled up by the left front wheel or the right front wheel, and capable of adjusting an airflow toward the leaning vehicle in a front portion of the leaning vehicle during traveling of the leaning vehicle. However, the front portion of the leaning vehicle is provided with the lean actuator, and the left front wheel and the right front wheel supported by a linkage mechanism to be movable upward or downward relative to the vehicle main body. Thus, the leaning vehicle is demanded to have a vehicle body structure capable of protecting the lean actuator and adjusting an airflow toward the leaning vehicle in the front portion of the leaning vehicle while assuring movable ranges for the left front wheel and the right front wheel.

It is therefore an object of the present teaching to provide a leaning vehicle including a left front wheel located at the left of a vehicle main body, a right front wheel located at the right of the vehicle main body, and a lean actuator configured to control leaning of the vehicle in the left direction or in the right direction, with a vehicle body structure capable of protecting the lean actuator and adjusting an airflow toward the leaning vehicle in a front portion of the leaning vehicle.

The prior-art documents EP 3 381 778 A1 and US 2016/229249 A1 disclose the features of the preamble of claim 1.

### SOLUTION TO PROBLEM

The inventor of the present teaching studied, in a leaning vehicle including a left front wheel located at the left of a vehicle main body, a right front wheel located at the right of the vehicle main body, and a lean actuator configured to control leaning of the vehicle in the left direction or in the right direction, a vehicle body structure capable of protecting the lean actuator and adjusting an airflow toward the leaning vehicle in a front portion of the leaning vehicle. Through an intensive study, the inventor arrived at the configurations as follows:
A leaning vehicle according to one embodiment of the present teaching is a leaning vehicle configured to lean leftward when turning to the left and lean rightward when turning to the right, and includes: a vehicle main body; a left front wheel located at left of the vehicle main body; a right front wheel located at right of the vehicle main body; a linkage mechanism located between the left front wheel and the right front wheel and supporting the left front wheel and the right front wheel such that the left front wheel and the right front wheel are movable upward or downward relative to the vehicle main body; and a lean actuator at least partially located further rearward than the linkage mechanism when the vehicle is seen in a left-right direction, at least a part of the lean actuator being located between the left front wheel and the right front wheel when the vehicle is seen toward rear, the lean actuator being connected to the linkage mechanism such that the left front wheel and the right front wheel are movable upward or downward relative to the vehicle main body. The leaning vehicle includes a leg shield located further rearward than the left front wheel and the right front wheel, at least a portion of the leg shield being located between each of the left and right front wheels, and a leg of a driver. A leg-shield-intermediate portion located in an intermediate portion of the leg shield in the left-right direction projects further forward than a leg-shield-left portion and a leg-shield-right portion, the leg-shield-left portion being located further leftward than the leg-shield-intermediate portion, the leg-shield-right portion being located further rightward than the leg-shield-intermediate portion, and covers at least a part of a lean-actuator-left portion and a lean-actuator-right portion, the lean-actuator-left portion being a left portion of the lean actuator, the lean-actuator-right portion being a right portion of the lean actuator.

As described above, the lean actuator is at least partially located further rearward than the linkage mechanism when the vehicle is seen in the left-right direction, and at least partially located between the left front wheel and the right front wheel when the vehicle is seen in the front-rear direction. The leg shield located further rearward than the left front wheel and the right front wheel and at least partially located between each of the left and right front wheels, and a leg of the driver includes the leg-shield-intermediate portion located at the intermediate position in the left-right direction and projecting forward so that an airflow that has flowed in between the left front wheel and the right front wheel from the front of the leaning vehicle is branched into left and right portions by the leg-shield-intermediate portion, and flows to the rear along the leg-shield-left portion and the leg-shield-right portion, respectively. Accordingly, the airflow flows to the rear of the leaning vehicle, while avoiding the lean actuator in which at least a part of the lean-actuator-left portion and the lean-actuator-right portion is covered with the leg-shield-intermediate portion and the legs of the driver are at least partially covered with the leg shield. The airflow includes not only a flow of a gas such as air, but also movement of a liquid such as rain, solids such as stones, sand, dust, and so forth, carried together with the gas. A part of liquids and solids included in the airflow and at least a part of solid and liquids whirled up by the left front wheel or the right front wheel are brought into contact with the leg-shield-intermediate portion covering at least a part of the lean-actuator-left portion and the lean-actuator-right portion and are carried to the rear of the leaning vehicle by the airflow.

Thus, the leg shield can prevent an airflow that has flowed in between the left front wheel and the right front wheel from the front of the leaning vehicle and including solids and liquids from hitting the lean actuator and the legs of the driver. In this manner, the leg shield can protect the lean actuator by the leg-shield-intermediate portion projecting further forward than the leg-shield-left portion and the leg-shield-right portion, and adjust the airflow by the leg-shield-intermediate portion, the leg-shield-left portion, and the leg-shield-right portion.

Thus, in the leaning vehicle including the left front wheel located at the left of the vehicle main body, the right front wheel located at the right of the vehicle main body and the lean actuator configured to control leftward or rightward leaning of the vehicle is provided with the vehicle body structure capable of protecting the lean actuator and adjusting an airflow toward the leaning vehicle in a front portion of the leaning vehicle.

In another aspect, the leaning vehicle according to the present teaching preferably has the following configuration. The leaning vehicle further includes a front-portion-vehicle-body cover covering a vehicle-main-body-front portion, the vehicle-main-body-front portion being located further forward than the leg shield in the vehicle main body. A width of the leg-shield-intermediate portion in the left-right direction is larger than a width of the vehicle-main-body-front portion or the front-portion-vehicle-body cover in the left-right direction.

Accordingly, the airflow that has flowed in between the left front wheel and the right front wheel from the front of the leaning vehicle is more reliably branched into left and right portions by the leg-shield-intermediate portion and flows toward the rear of the leaning vehicle. As a result, the leg shield can further ensure prevention of the airflow from hitting the lean actuator and the legs of the driver.

Thus, the leaning vehicle including the left front wheel located at the left of the vehicle main body, the right front wheel located at the right of the vehicle main body, and the lean actuator configured to control leftward or rightward leaning of the vehicle is provided with the vehicle body structure capable of protecting the lean actuator and more reliably adjusting an airflow toward the leaning vehicle in a front portion of the leaning vehicle.

In another aspect, the leaning vehicle according to the present teaching preferably has the following configuration. At least one of the leg-shield-left portion or the leg-shield-right portion includes a leg-shield-lower-inclined portion located rearward toward a lower edge of corresponding one of the leg-shield-left portion or the leg-shield-right portion.

Accordingly, the airflow that has flowed in between the left front wheel and the right front wheel from the front of the leaning vehicle flows under the leg shield. As a result, the leg shield can further ensure prevention of the airflow from hitting the lean actuator and the legs of the driver.

Thus, the leaning vehicle including the left front wheel located at the left of the vehicle main body, the right front wheel located at the right of the vehicle main body, and the lean actuator configured to control leftward or rightward leaning of the vehicle is provided with the vehicle body structure capable of protecting the lean actuator and more reliably adjusting an airflow toward the leaning vehicle in a front portion of the leaning vehicle.

In another aspect, the leaning vehicle according to the present teaching preferably has the following configuration. A width of a front portion of the leg-shield-intermediate portion in the left-right direction gradually decreases toward a lower edge of the leg-shield-intermediate portion.

Accordingly, the airflow that has flowed in between the left front wheel and the right front wheel from the front of the leaning vehicle is more reliably branched into left and right portions by the leg-shield-intermediate portion and flows toward the rear of the leaning vehicle. As a result, the leg shield can further ensure prevention of the airflow from hitting the lean actuator and the legs of the driver.

Thus, the leaning vehicle including the left front wheel located at the left of the vehicle main body, the right front wheel located at the right of the vehicle main body, and the lean actuator configured to control leftward or rightward leaning of the vehicle is provided with the vehicle body structure capable of protecting the lean actuator and more reliably adjusting an airflow toward the leaning vehicle in a front portion of the vehicle.

In another aspect, the leaning vehicle according to the present teaching preferably has the following configuration. A width of the leg-shield-intermediate portion in the left-right direction gradually increases toward a rear end of the leg-shield-intermediate portion.

Accordingly, the airflow that has flowed in between the left front wheel and the right front wheel from the front of the leaning vehicle is more reliably branched into left and right portions by the leg-shield-intermediate portion and flows toward the rear. As a result, the leg shield can further ensure prevention of the airflow from hitting the lean actuator and the legs of the driver.

Thus, the leaning vehicle including the left front wheel located at the left of the vehicle main body, the right front wheel located at the right of the vehicle main body, and the lean actuator configured to control leftward or rightward leaning of the vehicle is provided with the vehicle body structure capable of protecting the lean actuator, and more reliably adjusting an airflow toward the leaning vehicle in a front portion of the leaning vehicle.

In another aspect, the leaning vehicle according to the present teaching preferably has the following configuration. The leg-shield-left portion includes a leg-shield-left-inclined portion located rearward toward a left edge of the leg-shield-left portion. The leg-shield-right portion includes a leg-shield-right-inclined portion located rearward toward a right edge of the leg-shield-right portion.

Accordingly, the airflow that has flowed in between the left front wheel and the right front wheel from the front of the leaning vehicle is more reliably branched into left and right portions by the leg-shield-intermediate portion and flows toward the rear of the leaning vehicle. As a result, the leg shield can further ensure prevention of the airflow from hitting the lean actuator and the legs of the driver.

Thus, the leaning vehicle including the left front wheel located at the left of the vehicle main body, the right front wheel located at the right of the vehicle main body, and the lean actuator configured to control leftward or rightward leaning of the vehicle is provided with the vehicle body structure capable of protecting the lean actuator and more reliably adjusting an airflow toward the leaning vehicle in a front portion of the leaning vehicle.

In another aspect, the leaning vehicle according to the present teaching preferably has the following configuration. A center portion of the leg-shield-intermediate portion in a top-bottom direction covers at least a part of the lean-actuator-left portion and the lean-actuator-right portion.

As a result, the leg shield can further ensure prevention of the airflow from hitting the lean actuator and the legs of the driver.

In another aspect, the leaning vehicle according to the present teaching preferably has the following configuration. The left front wheel and the right front wheel are steering wheels.

In this leaning vehicle including the left front wheel and the right front wheel as the steering wheel, the leg shield having the configuration described above can further ensure prevention of the airflow from hitting the lean actuator and the legs of the driver, while avoiding interference with the left front wheel and the right front wheel.

The terminology used herein is for the purpose of describing particular embodiments only, and is not intended to be limiting of the invention.

As used herein, the term "and/or" includes any and all combinations of one or more of the associated listed items.

It will be further understood that the terms "including," "comprising" or "having" and variations thereof when used in this specification, specify the presence of stated features, steps, elements, components, and/or their equivalents, but do not preclude the presence or addition of one or more steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion. Nevertheless, the specification and claims should be read with the understanding that such combinations are entirely within the scope of the invention and the claims.

An embodiment of a leaning vehicle according to the present teaching will be herein described.

In the following description, numerous specific details are set forth in order to provide a thorough understanding of the present invention. It will be evident, however, to one skilled in the art that the present invention may be practiced without these specific details.

The present disclosure is to be considered as an exemplification of the invention, and is not intended to limit the invention to the specific embodiments illustrated by the figures or description below.

### [Leaning Vehicle]

A leaning vehicle herein is a vehicle that turns in a leaning posture. Specifically, the leaning vehicle is a vehicle that leans leftward when turning to the left and leans rightward when turning to the right in a left-right direction of the vehicle. The leaning vehicle may be a single-passenger vehicle or a vehicle on which a plurality of passengers can ride. The leaning vehicle includes all the types of vehicles that turn in leaning postures, such as three-wheeled vehicles and four-wheeled vehicles.

### [Leg Shield]

A leg shield herein refers to a member that is a part of a vehicle body cover, is located further rearward than a left front wheel and a right front wheel, and covers at least a part of legs of a driver when the leaning vehicle is seen toward the rear. The leg shield includes a leg-shield-intermediate portion located in an intermediate portion in the left-right direction, a leg-shield-left portion located further leftward than the leg-shield-intermediate portion, and a leg-shield-right portion located further rightward than the leg-shield-intermediate portion. The leg-shield-intermediate portion covers at least a part of a lean actuator for driving a leaning mechanism.

### ADVANTAGEOUS EFFECTS OF INVENTION

In one embodiment of the present teaching, in a leaning vehicle including a lean actuator for controlling leaning of the vehicle in the left direction or in the right direction, it is possible to provide a configuration capable of adjusting an airflow toward the leaning vehicle in a front portion of the leaning vehicle.

### BRIEF DESCRIPTION OF DRAWINGS

[FIG. 1] FIG. 1 is a left side view schematically illustrating an overall configuration of a leaning vehicle according to an embodiment.
[FIG. 2] FIG. 2 is a front view schematically illustrating the overall configuration of the leaning vehicle.
[FIG. 3] FIG. 3 is a disassembled perspective view illustrating a schematic configuration of a vehicle body frame.
[FIG. 4] FIG. 4 is a perspective view of a leg shield when seen toward the rear.
[FIG. 5] FIG. 5 is a cross-sectional view taken along line V-V in FIG. 4.
[FIG. 6] FIG. 6 is a plan view schematically illustrating a positional relationship among the vehicle body frame, a vehicle body cover, and a driver.
[FIG. 7] FIG. 7 is a schematic view of a linkage mechanism with the vehicle body frame leaning leftward when the linkage mechanism is seen toward the rear.
[FIG. 8] FIG. 8 is a schematic view of the linkage mechanism with the vehicle body frame leaning rightward when the linkage mechanism is seen toward the rear.
[FIG. 9] FIG. 9 shows a front view of the leaning vehicle and a plan view schematically illustrating the shape and arrangement of the vehicle body cover in the leaning vehicle.

### DESCRIPTION OF EMBODIMENT

An embodiment will be described hereinafter with reference to the drawings. In the drawings, the same or corresponding parts are denoted by the same reference numerals, and description thereof will not be repeated. The dimensions of components in the drawings do not strictly represent actual dimensions of the components and dimensional proportions of the components.

In the following description, arrow F in the drawings represents a forward direction of a leaning vehicle 1. Arrow B in the drawings represents a rearward direction of the leaning vehicle 1. Arrow U in the drawings represents an upward direction of the leaning vehicle 1. Arrow D in the drawings represents a downward direction of the leaning vehicle 1. Arrow R in the drawings represents a rightward direction of the leaning vehicle 1. Arrow L in the drawings represents a leftward direction of the leaning vehicle 1. A front-rear direction, a left-right direction, and a top-bottom direction of the leaning vehicle 1 refer to a front-rear direction, a left-right direction, and a top-bottom direction, respectively, with respect to the leaning vehicle 1 when seen from a driver of the leaning vehicle 1.

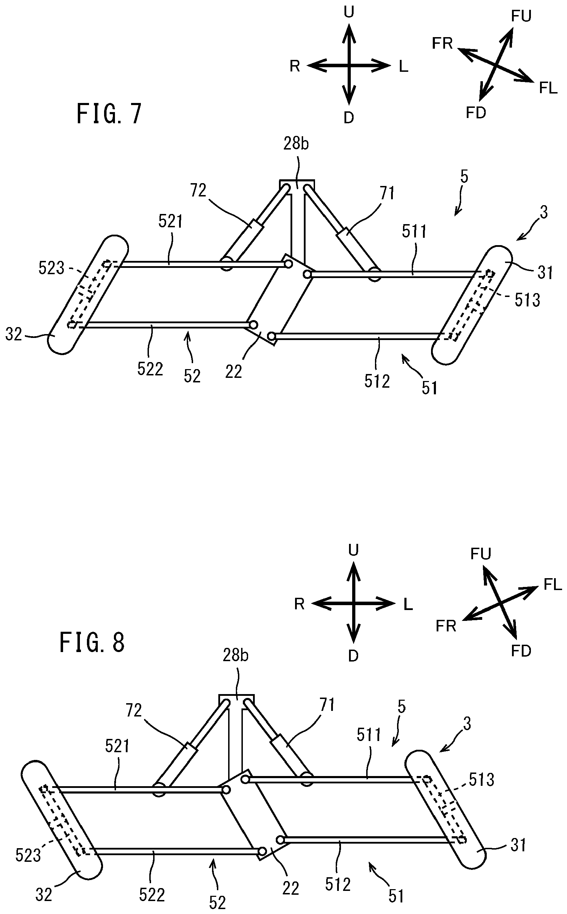

The leaning vehicle 1 according to this embodiment turns with a vehicle body frame 21 leaning leftward or rightward with respect to the vertical direction. Thus, in FIGS. 7 and 8 illustrating a state where the vehicle body frame 21 leans, in addition to the directions with respect to the leaning vehicle 1 described above, directions with respect to the vehicle body frame 21 are defined as follows.

Arrow FU in the drawings represents an upward direction of the vehicle body frame 21. Arrow FD in the drawings represents a downward direction of the vehicle body frame 21. Arrow FR in the drawings represents a rightward direction of the vehicle body frame 21. Arrow FL in the drawings represents a leftward direction of the vehicle body frame 21. A left-right direction and a top-bottom direction of the vehicle body frame 21 refer to a left-right direction and a top-bottom direction, respectively, with respect to the vehicle body frame 21 when seen from a passenger driving the leaning vehicle 1.

### (Overall Configuration)

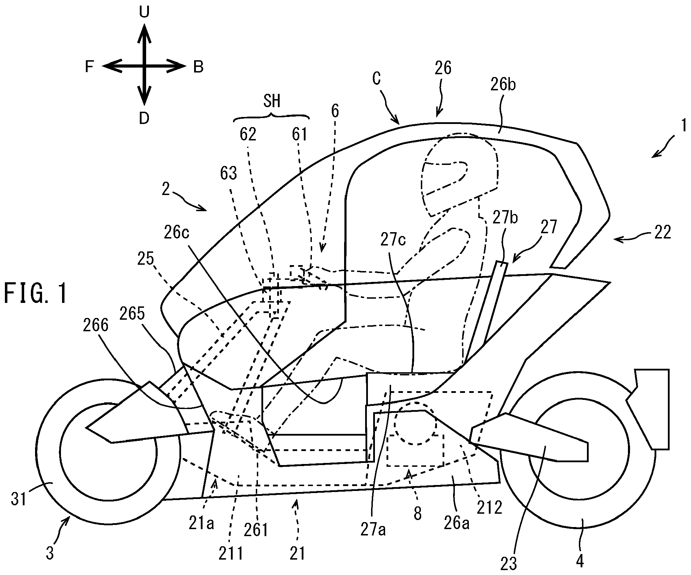

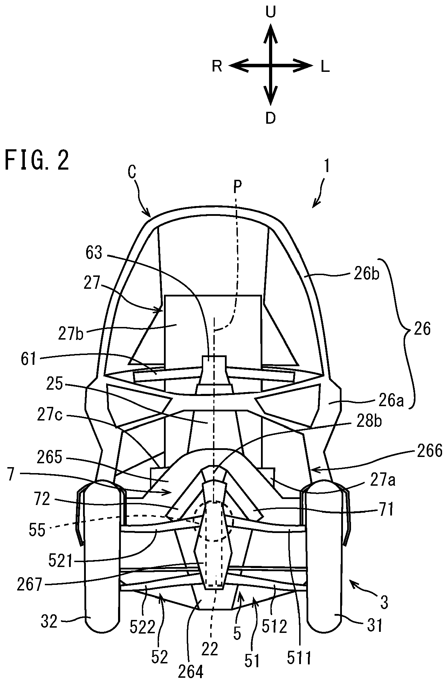

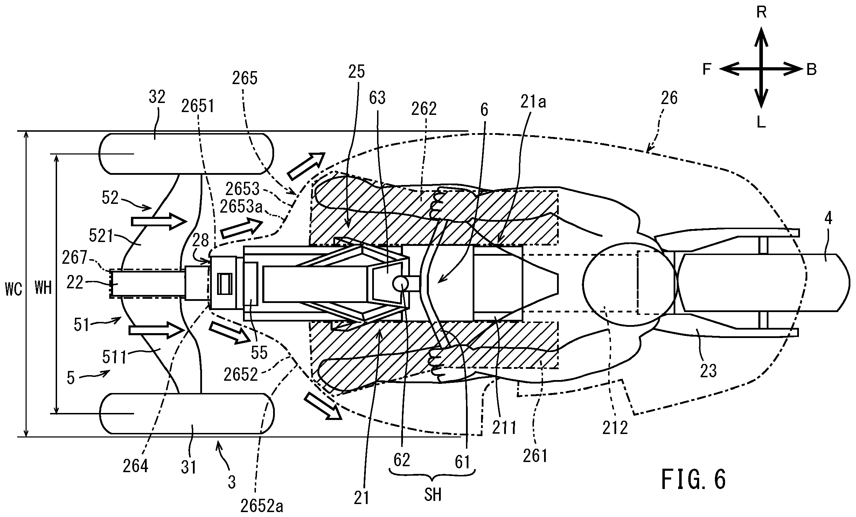

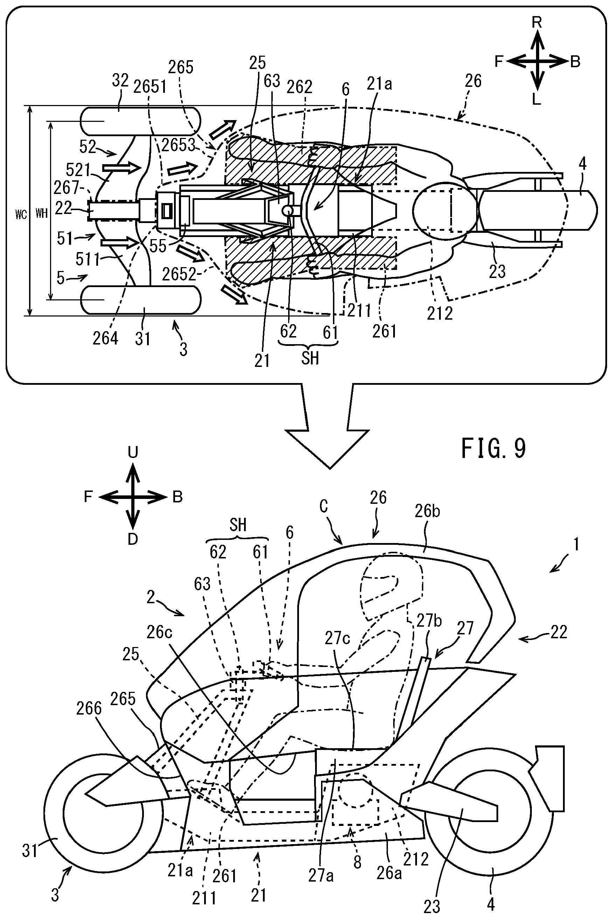

FIG. 1 is a left side view schematically illustrating an overall configuration of the leaning vehicle 1 according to the embodiment. FIG. 2 is a front view schematically illustrating the overall configuration of the leaning vehicle 1. FIG. 9 shows FIG. 1 and FIG. 6 together. The leaning vehicle 1 includes a vehicle main body 2, a pair of left and right front wheels 3, a rear wheel 4, a linkage mechanism 5, a steering mechanism 6, a buffer device 7, a power unit 8 (driving source), and a linkage-mechanism-driving motor 55 (lean actuator).

The leaning vehicle 1 according to this embodiment is a vehicle that leans leftward when turning to the left and leans rightward when turning to the right. That is, the leaning vehicle 1 according to this embodiment is a vehicle in which the vehicle main body 2 and the pair of left and right front wheels 3 lean leftward when turning to the left and the vehicle main body 2 and the pair of left and right front wheels 3 lean rightward when turning to the right.

As illustrated in FIGS. 1 and 2, the vehicle main body 2 includes the vehicle body frame 21, a rear arm 23, a vehicle body cover 26, and a seat 27. In FIGS. 1 and 2, the vehicle body frame 21 is in an upright state. In the case of referring to FIGS. 1 and 2, the following description is based on a premise that the vehicle body frame 21 is in the upright state. The upright state of the vehicle body frame 21 refers to a state where the top-bottom direction of the vehicle body frame 21 coincides with the vertical direction.

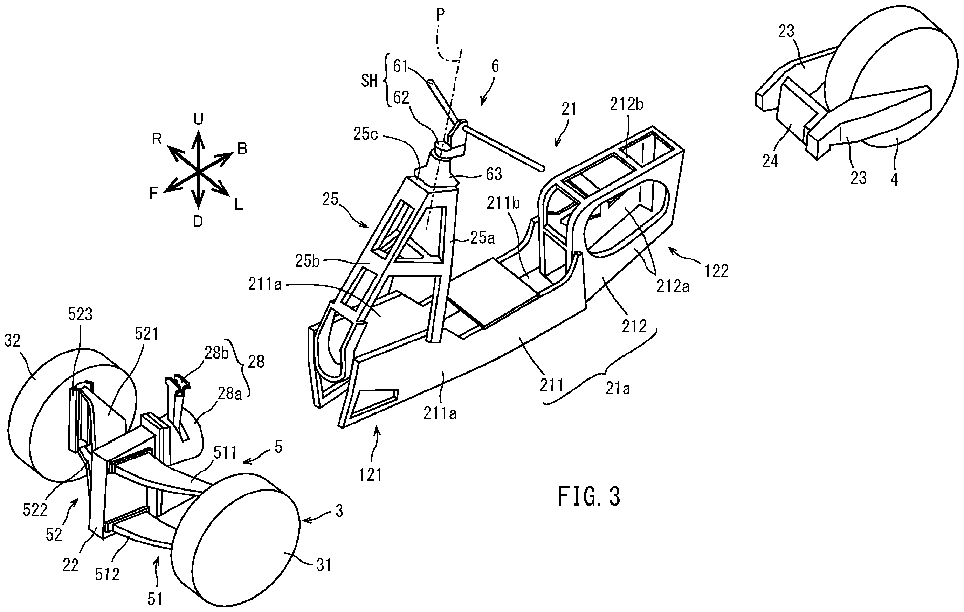

As illustrated in FIG. 1, the vehicle body frame 21 supports mounted parts mounted on the leaning vehicle 1, such as the vehicle body cover 26, the seat 27, and the power unit 8. Although not specifically illustrated, a front portion of the vehicle body frame 21 supports the linkage mechanism 5 and the linkage-mechanism-driving motor 55. A rear portion of the vehicle body frame 21 supports a rear-arm-support part 24 (see FIG. 3), the seat 27, and the power unit 8.

The power unit 8 includes a motor as a power generating source, for example. The power unit 8 may include an engine, or may have a hybrid system including a combination of an engine and a motor, as the power generating source.

FIG. 3 is a disassembled perspective view illustrating a schematic configuration of the vehicle body frame 21, the pair of left and right front wheels 3, the rear wheel 4, the linkage mechanism 5, and the steering mechanism 6. As illustrated in FIG. 3, the vehicle body frame 21 includes a main framework part 21a, a linkage-mechanism-support part 22 (vehicle-main-body-front portion), the rear-arm-support part 24, and a handlebar support part 25.

The main framework part 21a is a frame constituting a framework of the vehicle main body 2 of the leaning vehicle 1. The main framework part 21a linearly extends in the front-rear direction. That is, the width of the main framework part 21a in the left-left-right direction is smaller than the length of the main framework part 21a in the front-rear direction. The main framework part 21a includes a front framework part 211 and a rear framework part 212. The front framework part 211 and the rear framework part 212 are aligned in the front-rear direction and are coupled to each other.

The front framework part 211 is located ahead of the rear framework part 212 in the main framework part 21a. The front framework part 211 extends in the front-rear direction. The front framework part 211 includes a pair of front-framework-side-wall portions 211a and a front-framework-bottom-wall portion 211b. The pair of front-framework-side-wall portions 211a is disposed side by side in the left-right direction and elongated in the front-rear direction. The front-framework-bottom-wall portion 211b connects lower end portions of the pair of front-framework-side-wall portions 211a. The pair of front-framework-side-wall portions 211a and the front-framework-bottom-wall portion 211b are connected to each other by, for example, welding. The pair of front-framework-side-wall portions 211a and the front-framework-bottom-wall portion 211b may be connected to each other by, for example, bonding or bolts, or may be integrally formed.

The height of the pair of front-framework-side-wall portions 211a is lower in rear portions than front portions. Accordingly, the front framework part 211 is allowed to be placed near the feet of a driver seated on a seat surface 27c of the seat 27. Thus, the main framework part 21a can be disposed in a lower portion of the leaning vehicle 1. Accordingly, the barycenter of the leaning vehicle 1 can be lowered. The height as used in this embodiment refers to the height from the road surface on which the leaning vehicle 1 is traveling.

The rear framework part 212 is located behind the front framework part 211 in the main framework part 21a. The rear framework part 212 extends in the front-rear direction. The rear framework part 212 includes a pair of rear-framework-side-wall-portions 212a and a plurality of rear-framework-beam portions 212b. The pair of rear-framework-side-wall-portions 212a is disposed side by side in the left-right direction and elongated in the front-rear direction. The plurality of rear-framework-beam portions 212b connect the pair of rear-framework-side-wall-portions 212a in the left-right direction.

The dimension of the rear framework part 212 in the top-bottom direction is larger than the dimension of the front framework part 211 in the top-bottom direction. The dimension of the rear framework part 212 in the left-right direction is smaller than the dimension of the front framework part 211 in the left-right direction.

A front portion of the front framework part 211 supports the linkage-mechanism-support part 22 and the linkage-mechanism-driving motor 55 (see FIGS. 3 and 6). A front portion of the rear framework part 212 supports the power unit 8 and the seat 27, and a rear portion of the rear framework part 212 supports the rear-arm-support part 24 (see FIGS. 1 and 3).

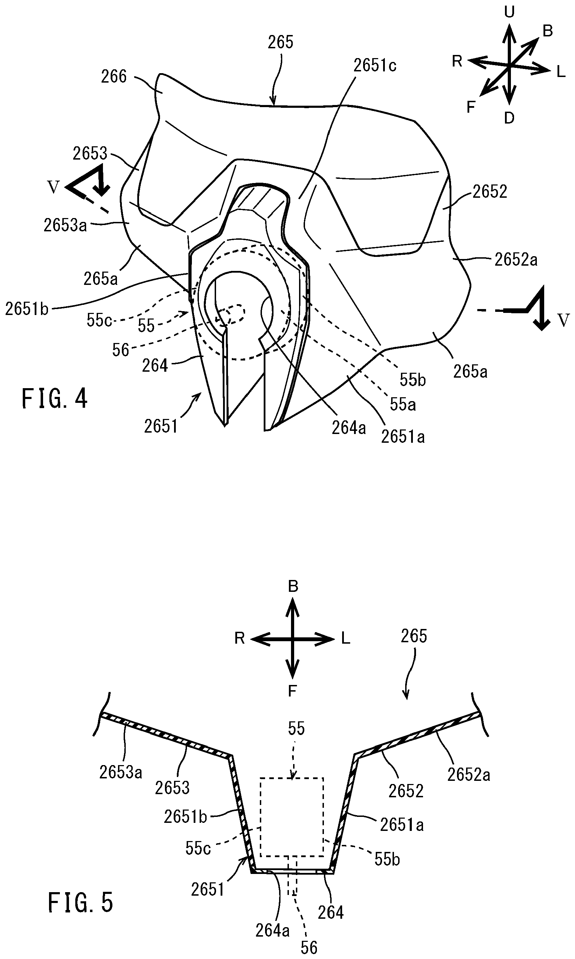

As illustrated in FIG. 4, the main framework part 21a is located between a left step 261 and a right step 262, which will be described later and are provided in a vehicle-body-cover-main body 26a, in plan view. That is, the main framework part 21a linearly extends in the front-rear direction between legs of the driver whose feet are placed on the left step 261 and the right step 262 in a state where the driver is seated on the seat surface 27c of the seat 27 described later.

As illustrated in FIG. 1, the seat 27 is supported by the rear framework part 212 of the vehicle body frame 21. The seat 27 includes a seat portion 27a and a seat back 27b. The seat portion 27a of the seat 27 is supported by an upper portion of the rear framework part 212. The upper surface of the seat portion 27a is the seat surface 27c on which the driver is seated.

As illustrated in FIG. 3, the linkage-mechanism-support part 22 is connected to the front end of the front framework part 211. The linkage-mechanism-support part 22 supports the linkage mechanism 5 described later. The linkage mechanism 5 supports the pair of left and right front wheels 3. That is, the linkage-mechanism-support part 22 supports the pair of left and right front wheels 3 through the linkage mechanism 5. The linkage-mechanism-support part 22 constitutes a vehicle-main-body-front portion located further forward than the leg shield of the vehicle main body 2 described later. A front portion and an upper portion of the linkage-mechanism-support part 22 are covered with a front-portion-vehicle-body cover 267 of the vehicle body cover 26 described later. The configuration of the linkage mechanism 5 will be specifically described later.

As illustrated in FIGS. 2 and 3, the pair of left and right front wheels 3 includes a left front wheel 31 located at the left of the vehicle body frame 21 and a right front wheel 32 located at the right of the vehicle body frame 21. A left arm mechanism 51 of the linkage mechanism 5 described later extends leftward from the linkage-mechanism-support part 22 to support the left front wheel 31 to the vehicle body frame 21. A right arm mechanism 52 of the linkage mechanism 5 described later extends rightward from the linkage-mechanism-support part 22 to support the right front wheel 32 to the vehicle body frame 21.

As illustrated in FIG. 3, a buffer-device-support part 28 supporting the buffer device 7 (see FIG. 2) is disposed between the linkage-mechanism-support part 22 and the front framework part 211. The buffer-device-support part 28 is connected to an upper portion of the linkage-mechanism-support part 22 and a front lower end portion of the handlebar support part 25 connected to the front framework part 211.

The buffer-device-support part 28 includes a buffer-device-support-main-body portion 28a and a tower portion 28b. The buffer-device-support-main-body portion 28a is a cylindrical member and supports a proximal end portion of the tower portion 28b extending in the top-bottom direction. The buffer-device-support-main-body portion 28a is connected to the linkage-mechanism-support part 22 and the front lower end portion of the handlebar support part 25. As will be described later, an output shaft 56 of the linkage-mechanism-driving motor 55 and a transfer member for transferring a driving force of the linkage-mechanism-driving motor 55 from the output shaft 56 to the linkage mechanism 5 are disposed inside the buffer-device-support-main-body portion 28a.

As illustrated in FIG. 2, the buffer device 7 includes a left buffer device 71 and a right buffer device 72. The left buffer device 71 connects the tower portion 28b to a left-upper-arm member 511 of the linkage mechanism 5 described later. The right buffer device 72 connects the tower portion 28b to a right-upper-arm member 521 of the linkage mechanism 5 described later. Although not specifically illustrated, each of the left buffer device 71 and the right buffer device 72 includes a spring and a damper.

The left buffer device 71 buffers a force to be input to the left front wheel 31 from the road surface and positions the left front wheel 31 relative to the vehicle body frame 21 (see FIG. 1). The right buffer device 72 buffers a force to be input to the right front wheel 32 from the road surface and positions the right front wheel 32 relative to the vehicle body frame 21 (see FIG. 1).

As illustrated in FIG. 3, the handlebar support part 25 is connected to an upper portion of a front portion of the front framework part 211, and extends upward from an upper portion of the front framework part 211. A part of the handlebar support part 25 may extend upward from an upper portion of a portion except the front framework part 211 in the main framework part 21a. That is, the handlebar support part 25 may be provided in any manner in the main framework part 21a as long as the handlebar support part 25 at least partially extends upward from the upper portion of the front framework part 211.

The handlebar support part 25 may extend upward from an upper portion of a portion except the front framework part 211. That is, the handlebar support part 25 may extend upward from an upper portion of the main framework part 21a.

The handlebar support part 25 supports a bar handle 61 and a steering shaft 62 of the steering mechanism 6. The handlebar support part 25 has a height with which the bar handle 61 of the steering mechanism 6 is located at a position at which the driver seated on the seat surface 27c of the seat 27 can easily hold the bar handle 61.

The steering mechanism 6 includes the bar handle 61, the steering shaft 62, a steering-shaft-support part 63, and an unillustrated steering-force-transfer part. The bar handle 61 is a bar member extending in the left-right direction, and is connected to an upper end portion of the steering shaft 62. The steering shaft 62 is rotatably supported by the steering-shaft-support part 63 fixed to an upper portion of the handlebar support part 25, which will be described later. Although not specifically illustrated, the steering shaft 62 is connected to the steering-force-transfer part such that rotation of the bar handle 61 can be transferred to the steering-force-transfer part. The steering-force-transfer part transfers rotation of the steering shaft 62, as a steering force in the left direction or in the right direction, to the left front wheel 31 and the right front wheel 32. That is, the left front wheel 31 and the right front wheel 32 are steering wheels. A detailed configuration of the steering-force-transfer part will be omitted.

The bar handle 61 and the steering shaft 62 constitute a steering handle SH. The steering shaft 62 is a portion supported by the steering-shaft-support part 63, and does not include other rotation shafts connected to the steering shaft 62 by transfer parts. The steering handle SH rotates about a steering axis P.

As illustrated in FIG. 3, the handlebar support part 25 according to this embodiment includes four handle-support-leg parts 25a, a plurality of handle-support-beam parts 25b, and a handle-support-top-panel part 25c. Each of the four handle-support-leg parts 25a and the plurality of handle-support-beam parts 25b is a plate-shaped bar member elongated in one direction. The handle-support-top-panel part 25c is a flat-plate member.

Upper end portions of the four handle-support-leg parts 25a are coupled to the handle-support-top-panel part 25c. The four handle-support-leg parts 25a are coupled to one another in the left-right direction by a part of the plurality of handle-support-beam parts 25b, and are coupled to each other in the front-rear direction by another part of the plurality of handle-support-beam parts 25b. In this embodiment, the four handle-support-leg parts 25a, the plurality of handle-support-beam parts 25b, and the handle-support-top-panel part 25c are integrally formed. Accordingly, the handlebar support part 25 is formed in a tower shape by the plate-shaped bar members.

Lower end portions of the four handle-support-leg parts 25a are fixed to the front framework part 211. The steering-shaft-support part 63 of the steering mechanism 6 described later is fixed to the top of the handle-support-top-panel part 25c. The bar handle 61 is coupled to the steering shaft 62 rotatably supported by the steering-shaft-support part 63. The handlebar support part 25 supports the steering handle SH constituted by the bar handle 61 and the steering shaft 62.

The rear-arm-support part 24 is connected to the rear end of the rear framework part 212. The rear-arm-support part 24 rotatably supports front portions of the pair of left and right rear arms 23. Each of the pair of left and right rear arms 23 extends rearward from the rear-arm-support part 24. Rear portions of the pair of left and right rear arms 23 rotatably support the rear wheel 4.

### (Linkage Mechanism)

A configuration of the linkage mechanism 5 will now be described with reference to FIGS. 3, 7, and 8. FIG. 7 is a schematic view of the linkage mechanism 5 with the vehicle body frame 21 leaning leftward, when the linkage mechanism 5 is seen toward the rear. FIG. 8 is a schematic view of the linkage mechanism 5 with the vehicle body frame 21 leaning rightward, when the linkage mechanism 5 is seen toward the rear.

The linkage mechanism 5 is a double wishbone-type linkage mechanism. The linkage mechanism 5 is supported by the linkage-mechanism-support part 22. The linkage mechanism 5 includes the left arm mechanism 51 and the right arm mechanism 52.

The left arm mechanism 51 is connected to a left portion of the linkage-mechanism-support part 22 and the left front wheel 31. As will be described later, the left arm mechanism 51 is rotatable upward or downward relative to each of the linkage-mechanism-support part 22 and the left front wheel 31. That is, the left arm mechanism 51 supports the left front wheel 31 such that the left front wheel 31 is rotatable upward or downward with respect to the linkage-mechanism-support part 22.

The left arm mechanism 51 swings upward relative to the linkage-mechanism-support part 22 when the vehicle body frame 21 leans leftward, and swings downward relative to the linkage-mechanism-support part 22 when the vehicle body frame 21 leans rightward. The left arm mechanism 51 includes the left-upper-arm member 511, a left-lower-arm member 512, and a left knuckle 513.

The left-upper-arm member 511 is a flat-plate member and disposed between the linkage-mechanism-support part 22 and the left front wheel 31 to extend in the left-right direction. A right end portion of the left-upper-arm member 511 is connected to the linkage-mechanism-support part 22 to be rotatable upward or downward about the right end portion of the left-upper-arm member 511. A left end portion of the left-upper-arm member 511 is connected to the left knuckle 513 connected to the wheel member of the left front wheel 31 to be rotatable upward or downward about the left end portion of the left-upper-arm member 511.

The left-lower-arm member 512 is a flat-plate member and disposed under the left-upper-arm member 511 in parallel with the left-upper-arm member 511. That is, in a manner similar to the left-upper-arm member 511, the left-lower-arm member 512 is also disposed between the linkage-mechanism-support part 22 and the left front wheel 31 to extend in the left-right direction. A right end portion of the left-lower-arm member 512 is connected to the linkage-mechanism-support part 22 to be rotatable upward or downward about the right end portion of the left-lower-arm member 512. A left end portion of the left-lower-arm member 512 is connected to the left knuckle 513 connected to the wheel member of the left front wheel 31 to be rotatable upward or downward about the left end portion of the left-lower-arm member 512.

With the configuration of the left arm mechanism 51 described above, when the vehicle body frame 21 leans leftward, the left knuckle 513 leans leftward in parallel with the linkage-mechanism-support part 22. At this time, the left-upper-arm member 511 and the left-lower-arm member 512 are kept in the parallel state. On the other hand, when the vehicle body frame 21 leans rightward, the left knuckle 513 leans rightward in parallel with the linkage-mechanism-support part 22. At this time, the left-upper-arm member 511 and the left-lower-arm member 512 are kept in the parallel state.

The right arm mechanism 52 is connected to a right portion of the linkage-mechanism-support part 22 and the right front wheel 32. As will be described later, the right arm mechanism 52 is rotatable upward or downward relative to each of the linkage-mechanism-support part 22 and the right front wheel 32. That is, the right arm mechanism 52 supports the right front wheel 32 such that the right front wheel 32 is rotatable upward or downward with respect to the linkage-mechanism-support part 22.

The right arm mechanism 52 swings downward with respect to the linkage-mechanism-support part 22 when the vehicle body frame 21 leans leftward, and swings upward with respect to the linkage-mechanism-support part 22 when the vehicle body frame 21 leans rightward. The right arm mechanism 52 includes the right-upper-arm member 521, a right-lower-arm member 522, and a right knuckle 523.

The right-upper-arm member 521 is a flat-plate member and disposed between the linkage-mechanism-support part 22 and the right front wheel 32 to extend in the left-right direction. A left end portion of the right-upper-arm member 521 is connected to the linkage-mechanism-support part 22 to be rotatable upward or downward about the left end portion of the right-upper-arm member 521. A right end portion of the right-upper-arm member 521 is connected to the right knuckle 523 connected to the wheel member of the right front wheel 32 to be rotatable upward or downward about the right end portion of the right-upper-arm member 521.

The right-lower-arm member 522 is a flat-plate member and disposed under the right-upper-arm member 521 in parallel with the right-upper-arm member 521. That is, in a manner similar to the right-upper-arm member 521, the right-lower-arm member 522 is also disposed between the linkage-mechanism-support part 22 and the right front wheel 32 to extend in the left-right direction. A left end portion of the right-lower-arm member 522 is connected to the linkage-mechanism-support part 22 to be rotatable upward or downward about the left end portion of the right-lower-arm member 522. A right end portion of the right-lower-arm member 522 is connected to the right knuckle 523 connected to the wheel member of the right front wheel 32 to be rotatable upward or downward about the right end portion of the right-lower-arm member 522.

With the configuration of the right arm mechanism 52 described above, when the vehicle body frame 21 leans leftward, the right knuckle 523 leans leftward in parallel with the linkage-mechanism-support part 22. At this time, the right-upper-arm member 521 and the right-lower-arm member 522 are kept in the parallel state. On the other hand, when the vehicle body frame 21 leans rightward, the right knuckle 523 leans rightward in parallel with the linkage-mechanism-support part 22. At this time, the right-upper-arm member 521 and the right-lower-arm member 522 are kept in the parallel state.

In this manner, with the linkage mechanism 5 with the configuration described above, the vehicle body frame 21, the left front wheel 31, and the right front wheel 32 are allowed to lean leftward or rightward.

The leaning of the above-described linkage mechanism 5 in the left direction or in the right direction is controlled by the linkage-mechanism-driving motor 55 (lean actuator). Specifically, the linkage-mechanism-driving motor 55 applies a rotary force to the left arm mechanism 51 and the right arm mechanism 52 of the linkage mechanism 5 through the output shaft 56 (see FIGS. 4 and 5). More specifically, the linkage-mechanism-driving motor 55 applies a rotary force to at least one of the left-upper-arm member 511 or the left-lower-arm member 512 in the left arm mechanism 51 and to at least one of the right-upper-arm member 521 or the right-lower-arm member 522 in the right arm mechanism 52, through the output shaft 56, to cause these arm members to rotate upward or downward with respect to the linkage-mechanism-support part 22.

Accordingly, the linkage-mechanism-driving motor 55 changes relative positions of the left front wheel 31 and the right front wheel 32 in the top-bottom direction in accordance with leaning of the vehicle body frame 21. In the manner described above, the linkage-mechanism-driving motor 55 is connected to the linkage mechanism 5 to move the left front wheel 31 and the right front wheel 32 upward or downward relative to the vehicle main body 2.

The output shaft 56 of the linkage-mechanism-driving motor 55 may be directly connected to at least one of the left-upper-arm member 511 or the left-lower-arm member 512 and to at least one of the right-upper-arm member 521 or the right-lower-arm member 522. The output shaft 56 of the linkage-mechanism-driving motor 55 may be connected to at least one of the left-upper-arm member 511 or the left-lower-arm member 512 and to at least one of the right-upper-arm member 521 or the right-lower-arm member 522, through another transfer member. The output shaft 56 of the linkage-mechanism-driving motor 55 may be connected to, for example, a speed reducer.

As illustrated in FIG. 6, the linkage-mechanism-driving motor 55 is supported by the front portion of the front framework part 211 in the main framework part 21a. The linkage-mechanism-driving motor 55 is at least partially located further rearward than the linkage mechanism 5 when the leaning vehicle 1 is seen in the left-right direction, and at least partially located between the left front wheel 31 and the right front wheel 32 when the leaning vehicle 1 is seen toward the rear. Specifically, the linkage-mechanism-driving motor 55 is located at the center in the left-right direction and further rearward than the linkage-mechanism-support part 22 and the buffer-device-support part 28 in a plan view of the leaning vehicle 1. A motor front portion 55a as a front portion of the linkage-mechanism-driving motor 55, a motor left portion 55b as a left portion of the linkage-mechanism-driving motor 55, and a motor right portion 55c as a right portion of the linkage-mechanism-driving motor 55 are covered with a leg-shield-intermediate portion 2651 described later.

### (Vehicle Body Cover)

A configuration of the vehicle body cover 26 will now be described in detail.

The vehicle body cover 26 is supported by the vehicle body frame 21. As illustrated in FIGS. 1 and 2, the vehicle body cover 26 includes the vehicle-body-cover-main body 26a covering the vehicle body frame 21, an upper cover 26b located above the vehicle-body-cover-main body 26a, and the front-portion-vehicle-body cover 267 (see FIG. 2) covering the linkage-mechanism-support part 22.

The upper cover 26b has a convex shape projecting upward when seen in the left-right direction. The upper cover 26b is located over the head of the driver seated on the seat surface 27c of the seat 27.

Accordingly, the upper cover 26b constitutes a passenger space in which the driver rides, between the upper cover 26b and the vehicle-body-cover-main body 26a. That is, the upper cover 26b and the vehicle-body-cover-main body 26a form a cabin C that defines the passenger space and accommodates the driver seated on the seat surface 27c of the seat 27. The cover constituting the cabin C includes a leg shield 265 described later.

The cabin C may be constituted only by the vehicle-body-cover-main body 26a. The vehicle-body-cover-main body 26a constituting the cabin C may not include a portion covering a left portion of the driver, may not include a portion covering a right portion of the driver, may not include a portion covering a rear portion of the driver, or may not include some of these portions.

The vehicle-body-cover-main body 26a of this embodiment covers the right portion of the driver seated on the seat surface 27c of the seat 27, and leaves the left portion of the driver open. Accordingly, the driver is allowed to get on or off the leaning vehicle 1 from the left.

A right lower portion of the vehicle-body-cover-main body 26a has an opening 26c. The opening 26c is provided to allow the right foot of the driver seated on the seat surface 27c of the seat 27 to be placed on the ground through the opening 26c. That is, the leaning vehicle 1 includes the vehicle body cover 26 located at the right of the driver seated on the seat 27 to cover the right portion of the driver, and the vehicle body cover 26 has the opening 26c through which the right foot of the driver seated on the seat 27 is allowed to pass when the right foot of the driver is placed on the ground. As a result, convenience of the leaning vehicle 1 can be enhanced.

In a front lower portion of the vehicle-body-cover-main body 26a facing the passenger space, the left step 261 and the right step 262 (see FIG. 6) are provided. That is, the left step 261 and the right step 262 are disposed in a rear portion of the leg shield 265 described later of the vehicle-body-cover-main body 26a. The left step 261 is located in a left portion of the vehicle-body-cover-main body 26a, and the left foot of the driver seated on the seat surface 27c of the seat 27 is placed on the left step 261. The right step 262 is located in a right portion of the vehicle-body-cover-main body 26a, and the right foot of the driver seated on the seat surface 27c of the seat 27 is placed on the right step 262.

FIG. 6 is a plan view schematically illustrating a relationship among the driver, the vehicle body frame 21, and the vehicle body cover 26. In FIG. 6, parts of the leaning vehicle 1 except the vehicle body frame 21, the left front wheel 31, the right front wheel 32, the rear wheel 4, the linkage mechanism 5, and the steering mechanism 6, are not shown for description, and the outer shape of the vehicle body cover 26 is indicated by an alternate long and short dash line.

The left step 261 is located at the left of the main framework part 21a. The right step 262 is located at the right of the main framework part 21a. That is, the main framework part 21a is located between the left step 261 and the right step 262 in the left-right direction. In FIG. 6, the left step 261 and the right step 262 are indicated by chain double-dashed lines and slashes, for description.

In this embodiment, the left step 261 and the right step 262 are formed integrally with the vehicle-body-cover-main body 26a. The left step 261 and the right step 262 may be separately provided from the vehicle-body-cover-main body 26a.

With the configuration described above, the left step 261 and the right step 262 are supported by the main framework part 21a with the vehicle-body-cover-main body 26a interposed therebetween. The main framework part 21a may be provided with step support parts individually supporting the left step 261 and the right step 262. In this case, the left step 261 and the right step 262 are supported on the main framework part 21a by the step support parts.

As illustrated in FIGS. 1 and 2, the leg shield 265 covering the front of the driver seated on the seat surface 27c of the seat 27 is provided on a front portion of the vehicle-body-cover-main body 26a. That is, the vehicle body cover 26 includes the leg shield 265. The leg shield 265 constitutes a front portion of the cabin C.

As illustrated in FIG. 1, the leg shield 265 is located on the main framework part 21a between the left and right front wheels 31 and 32 and the seat 27 in the front-rear direction to cover the front of the driver seated on the seat surface 27c of the seat 27. That is, the leg shield 265 is located further rearward than the left front wheel 31 and the right front wheel 32, and at least partially located between the left and right front wheels 31 and 32 and the legs of the driver. The leg shield 265 is located outside the space in which the left front wheel 31 and the right front wheel 32 as the steering wheels rotate. This can prevent an airflow that has flowed in between the left front wheel 31 and the right front wheel 32 from the front of the leaning vehicle 1 from directly hitting the driver seated on the seat surface 27c of the seat 27. The airflow includes not only a flow of a gas such as air, but also movement of a liquid such as rain, solids such as stones, sand, and dust, and so forth, carried together with the gas.

As illustrated in FIG. 6, in this embodiment a maximum dimension WC of the leg shield 265 in the left-right direction is larger than a tread width WH between the left front wheel 31 and the right front wheel 32. Accordingly, it is possible to ensure prevention of an airflow that has flowed in between the left front wheel 31 and the right front wheel 32 from the front of the leaning vehicle 1 from directly hitting the driver seated on the seat surface 27c of the seat 27.

Since the leg shield 265 has the positional relationship with the left front wheel 31 and the right front wheel 32 described above, the leg shield 265 can also prevent water whirled up by the left front wheel 31 and the right front wheel 32 from entering the passenger space of the cabin C.

FIG. 4 is a perspective view of the leg shield 265 seen toward the rear. FIG. 5 is a cross-sectional view taken along line V-V in FIG. 4. As illustrated in FIG. 4, the leg shield 265 includes the leg-shield-intermediate portion 2651, a leg-shield-left portion 2652, and a leg-shield-right portion 2653. The leg-shield-intermediate portion 2651, the leg-shield-left portion 2652, and the leg-shield-right portion 2653 are arranged in the left-right direction. In this embodiment, the leg-shield-intermediate portion 2651, the leg-shield-left portion 2652, and the leg-shield-right portion 2653 are integrally formed. Alternatively, at least one of the leg-shield-intermediate portion 2651, the leg-shield-left portion 2652, or the leg-shield-right portion 2653 may be a separate member.

The leg-shield-intermediate portion 2651 is located in an intermediate portion of the leg shield 265 in the left-right direction. In this embodiment, the leg-shield-intermediate portion 2651 includes the center of the leg shield 265 in the left-right direction. The leg-shield-intermediate portion 2651 projects further forward than the leg-shield-left portion 2652 and the leg-shield-right portion 2653.

The leg-shield-intermediate portion 2651 includes, in a lower portion of a leg-shield-intermediate-front-wall portion 2651c, a motor cover 264 covering the motor front portion 55a of the linkage-mechanism-driving motor 55. As illustrated in FIG. 5, the leg-shield-intermediate portion 2651 covers the motor left portion 55b and the motor right portion 55c of the linkage-mechanism-driving motor 55 in a portion except the motor cover 264. Specifically, an intermediate portion of the leg-shield-intermediate portion 2651 in the top-bottom direction covers at least a part of the motor left portion 55b and the motor right portion 55c of the linkage-mechanism-driving motor 55.

As described above, the leg-shield-intermediate portion 2651 covers the motor front portion 55a, the motor left portion 55b, and the motor right portion 55c of the linkage-mechanism-driving motor 55. The leg-shield-intermediate portion 2651 is located outside the space in which the left front wheel 31 and the right front wheel 32 as the steering wheels rotate.

As illustrated in FIGS. 4 and 5, the motor cover 264 has an opening 264a which the cylindrical buffer-device-support part 28 penetrates. Although not specifically limited, the output shaft 56 of the linkage-mechanism-driving motor 55 and the transfer member for transferring a driving force from the output shaft 56 to the linkage mechanism 5 are disposed in the buffer-device-support part 28. The output shaft 56 of the linkage-mechanism-driving motor 55 penetrates the opening 264a of the motor cover 264.

As illustrated in FIGS. 4 and 5, the leg-shield-intermediate portion 2651 includes a leg-shield-intermediate-left-wall portion 2651a, a leg-shield-intermediate-right-wall portion 2651b, and the leg-shield-intermediate-front-wall portion 2651c. The leg-shield-intermediate-left-wall portion 2651a and the leg-shield-intermediate-right-wall portion 2651b approach each other in the left-right direction toward the lower edge of the leg-shield-intermediate portion 2651 in a front portion of the leg-shield-intermediate portion 2651. The leg-shield-intermediate-left-wall portion 2651a and the leg-shield-intermediate-right-wall portion 2651b are gradually separated away from each other in the left-right direction toward the rear end of the leg-shield-intermediate portion 2651.

Thus, the width of the front portion of the leg-shield-intermediate portion 2651 in the left-right direction gradually decreases toward the lower edge of the leg-shield-intermediate portion 2651. The width of the leg-shield-intermediate portion 2651 in the left-right direction gradually increases toward the rear end of the leg-shield-intermediate portion 2651. The rear end of the leg-shield-intermediate portion 2651 refers to the boundary between the leg-shield-intermediate portion 2651 and the leg-shield-left portion 2652, and the boundary between the leg-shield-intermediate portion 2651 and the leg-shield-right portion 2653.

The leg-shield-left portion 2652 is located at the left of the leg-shield-intermediate portion 2651. The leg-shield-left portion 2652 is located further rearward than the leg-shield-intermediate portion 2651. The leg-shield-left portion 2652 includes a leg-shield-left-inclined portion 2652a located rearward toward the lower edge. The leg-shield-left-inclined portion 2652a is located rearward toward the left edge. That is, in this embodiment, the leg-shield-left-inclined portion 2652a is located rearward toward the lower edge and rearward toward the left edge. The leg-shield-left-inclined portion 2652a also serves as a leg-shield-lower-inclined portion 265a located rearward toward the lower edge. The left step 261 is disposed in a rear portion of the leg-shield-left portion 2652. The thus-configured leg-shield-left portion 2652 is at least partially located between the left front wheel 31 and the leg of the driver. The leg-shield-left portion 2652 is located not to interfere with the left front wheel 31 and the right front wheel 32 as the steering wheels.

The leg-shield-right portion 2653 is located at the right of the leg-shield-intermediate portion 2651. The leg-shield-right portion 2653 is located further rearward than the leg-shield-intermediate portion 2651. The leg-shield-right portion 2653 includes a leg-shield-right-inclined portion 2653a located rearward toward the lower edge. The leg-shield-right-inclined portion 2653a is located rearward toward the right edge. That is, in this embodiment, the leg-shield-right-inclined portion 2653a is located rearward toward the lower edge and located rearward toward the right edge. The leg-shield-right-inclined portion 2653a also serves as a leg-shield-lower-inclined portion 265a located rearward toward the lower edge. The right step 262 is located in a rear portion of the leg-shield-right portion 2653. The thus-configured leg-shield-right portion 2653 is at least partially located between the right front wheel 32 and the leg of the driver. The leg-shield-right portion 2653 is located not to interfere with the left front wheel 31 and the right front wheel 32 as the steering wheels.

As described above, since the leg shield 265 includes the leg-shield-intermediate portion 2651 located at an intermediate position in the left-right direction and projecting forward, an airflow that has flowed in between the left front wheel 31 and the right front wheel 32 from the front of the leaning vehicle 1 and including, for example, solids and liquids is branched into left and right portions by the leg-shield-intermediate portion 2651 and flows to the rear of the leaning vehicle 1, as indicated by white arrows in FIG. 6. The airflow flowing at the left along the surface of the leg-shield-intermediate portion 2651 flows to the left rear of the leaning vehicle 1 along the surface of the leg-shield-left portion 2652. The airflow flowing on the right along the surface of the leg-shield-intermediate portion 2651 flows to the right rear of the leaning vehicle 1 along the surface of the leg-shield-right portion 2653. Accordingly, the airflow flows to the rear of the leaning vehicle 1, while avoiding the linkage-mechanism-driving motor 55 in which at least a part of the motor left portion 55b (lean-actuator-left portion) of the linkage-mechanism-driving motor 55 and the motor right portion 55c (lean-actuator-right portion) of the linkage-mechanism-driving motor 55 is covered with the leg-shield-intermediate portion 2651, and the legs of the driver at least partially covered with the leg shield 265.

A part of solids and liquids included in the airflow and at least a part of solids and liquids whirled up by the left front wheel 31 or the right front wheel 32 are brought into contact with the leg-shield-intermediate portion 2651 covering the linkage-mechanism-driving motor 55. The solids and the liquids in contact with the leg-shield-intermediate portion 2651 are carried out to the rear of the leaning vehicle 1 by the airflow flowing rearward without contacting the linkage-mechanism-driving motor 55.

Thus, the leg shield 265 can prevent the airflow that has flowed in between the left front wheel 31 and the right front wheel 32 from the front of the leaning vehicle 1 from hitting the linkage-mechanism-driving motor 55 and the legs of the driver. As described above, the leg shield 265 can protect the linkage-mechanism-driving motor 55 by the leg-shield-intermediate portion 2651 projecting further forward than the leg-shield-left portion 2652 and the leg-shield-right portion 2653, and adjust the airflow by the leg-shield-intermediate portion 2651, the leg-shield-left portion 2652, and the leg-shield-right portion 2653, such that the airflow flows to the rear of the leaning vehicle 1. Even in the absence of sufficient space between the left front wheel 31 and the right front wheel 32, the leg shield 265 is allowed to have the function of protecting the linkage-mechanism-driving motor 55 and the function of adjusting the airflow, by utilizing the shape of the leg shield 265.

Thus, the leaning vehicle 1 including the left front wheel 31 at the left of the vehicle main body 2, the right front wheel 32 at the right of the vehicle main body 2, and the linkage-mechanism-driving motor 55 for controlling leaning of the vehicle in the left direction or in the right direction is configured to have the vehicle body structure capable of protecting the linkage-mechanism-driving motor 55 and adjusting an airflow toward the leaning vehicle 1 in a front portion of the leaning vehicle 1.

In addition, as described above, with the leg-shield-lower-inclined portions 265a in which the leg-shield-left portion 2652 and the leg-shield-right portion 2653 are located rearward toward the lower edge, the airflow flows below the leg shield 265. Thus, the leg shield 265 can further ensure prevention of the airflow from hitting the linkage-mechanism-driving motor 55 and the legs of the driver.

Furthermore, as described above, since the leg-shield-left portion 2652 includes the leg-shield-left-inclined portion 2652a located rearward toward the left edge, the airflow flows at the left of the leg shield 265. In addition, since the leg-shield-right portion 2653 includes the leg-shield-right-inclined portion 2653a located rearward toward the right edge, the airflow flows at the right of the leg shield 265. Thus, the leg shield 265 can further ensure prevention of the airflow from hitting the linkage-mechanism-driving motor 55 and the legs of the driver.

Moreover, since the leg-shield-intermediate portion 2651 has the shape described above, the airflow is more reliably branched into the left and right portions and the lower portion by the leg-shield-intermediate portion 2651. Thus, the leg shield 265 can further ensure prevention of the airflow from hitting the linkage-mechanism-driving motor 55 and the legs of the driver.

In addition, as described above, the leg shield 265 can further ensure prevention of the airflow from hitting the linkage-mechanism-driving motor 55 and the legs of the driver, while avoiding interference with the left front wheel 31 and the right front wheel 32 as the steering wheels.

As illustrated in FIGS. 2 and 4, the leg shield 265 includes a light transmitting part 266 through which the driver seated on the seat surface 27c of the seat 27 can visually recognize at least a part of the left front wheel 31 and at least a part of the right front wheel 32 directly. The light transmitting part 266 is made of a light transmissive material. The light transmitting part 266 allows light to pass therethrough, but does not allow gas and liquid to pass therethrough. The light transmitting part 266 may include, for example, a transparent portion constituted by a transparent material. The light transmitting part 266 may be made of any material as long as the light transmitting part 266 is made of a light transmissive material that allows light to pass therethrough.

In the leg shield 265, the light transmitting part 266 is disposed at a position at which the driver seated on the seat surface 27c of the seat 27 can visually recognize at least a part of the left front wheel 31 and at least a part of the right front wheel 32 directly. Accordingly, the driver seated on the seat surface 27c of the seat 27 can visually recognize at least a part of the left front wheel 31 and at least a part of the right front wheel 32 directly through the light transmitting part 266. Thus, the driver can easily know the positions of the left front wheel 31 and the right front wheel 32

The front-portion-vehicle-body cover 267 covers at least the front portion and the upper portion of the linkage-mechanism-support part 22. As illustrated in FIG. 2, when the leaning vehicle 1 is seen toward the rear, the length of the front-portion-vehicle-body cover 267 in the top-bottom direction is larger than the width of the front-portion-vehicle-body cover 267 in the left-right direction. As illustrated in FIG. 6, when the leaning vehicle 1 is seen toward the rear, the width of the front-portion-vehicle-body cover 267 in the left-right direction is smaller than the width of the leg-shield-intermediate portion 2651 in the left-right direction. The width of the linkage-mechanism-support part 22 in the left-right direction, at least whose front portion and upper portion are covered with the front-portion-vehicle-body cover 267, is also smaller than the width of the leg-shield-intermediate portion 2651 in the left-right direction when the leaning vehicle 1 is seen toward the rear.

In this embodiment, the width of each of the front-portion-vehicle-body cover 267 and the linkage-mechanism-support part 22 in the left-right direction and the width of the leg-shield-intermediate portion 2651 in the left-right direction refer to the widths in the left-right direction at the same height when the leaning vehicle 1 is seen toward the rear.

Accordingly, the airflow that has flowed in between the left front wheel 31 and the right front wheel 32 from the front of the leaning vehicle 1 is more reliably branched into left and right portions by the leg-shield-intermediate portion 2651, and flows toward the rear of the leaning vehicle 1. Thus, the leg shield 265 can further ensure prevention of the airflow from hitting the linkage-mechanism-driving motor 55 and the legs of the driver.

### (Other Embodiments)

In the embodiment, the width of the front portion of the leg-shield-intermediate portion 2651 in the left-right direction gradually decreases toward the lower edge of the leg-shield-intermediate portion 2651. Alternatively, the width of the front portion of the leg-shield-intermediate portion in the left-right direction may vary in the top-bottom direction in a manner different from the embodiment, such that the width of the front portion of the leg-shield-intermediate portion in the left-right direction gradually increases toward the lower edge of the leg-shield-intermediate portion or is at maximum at an intermediate position of the leg-shield-intermediate portion in the top-bottom direction. The width of the front portion of the leg-shield-intermediate portion may be uniform in the top-bottom direction.

In the embodiment, the width of the leg-shield-intermediate portion 2651 in the left-right direction gradually increases toward the rear end of the leg-shield-intermediate portion 2651. Alternatively, the width of the leg-shield-intermediate portion in the left-right direction may vary in the front-rear direction in a manner different from the embodiment, such that the width of the leg-shield-intermediate portion in the left-right direction gradually decreases toward the rear end of the leg-shield-intermediate portion or is at maximum at an intermediate position of the leg-shield-intermediate portion in the front-rear direction. The width of the leg-shield-intermediate portion in the left-right direction may be uniform in the front-rear direction.

In the embodiment, the intermediate portion of the leg-shield-intermediate portion 2651 in the top-bottom direction covers at least a part of the motor left portion 55b and the motor right portion 55c of the linkage-mechanism-driving motor 55. Alternatively, not the intermediate portion of the leg-shield-intermediate portion in the top-bottom direction but another portion of the leg-shield-intermediate portion may cover at least a part of the motor left portion and the motor right portion of the linkage-mechanism-driving motor.

In the embodiment, the leg-shield-left portion 2652 includes the leg-shield-left-inclined portion 2652a that is located rearward toward the lower edge and located rearward toward the left edge. The leg-shield-left-inclined portion 2652a also serves as the leg-shield-lower-inclined portion 265a. Alternatively, the leg-shield-left portion may include only an inclined portion located rearward toward the lower edge or may include only an inclined portion located rearward toward the left edge.

In the embodiment, the leg-shield-right portion 2653 includes the leg-shield-right-inclined portion 2653a located rearward toward the lower edge and located rearward toward the right edge. The leg-shield-right-inclined portion 2653a also serves as the leg-shield-lower-inclined portion 265a. Alternatively, the leg-shield-right portion may include only an inclined portion located rearward toward the lower edge or may include only an inclined portion located rearward toward the right edge.

In the embodiment, the leg-shield-left-inclined portion 2652a and leg-shield-right-inclined portion 2653a serve also as the leg-shield-lower-inclined portion 265a located rearward toward the lower edge. That is, both the leg-shield-left portion 2652 and the leg-shield-right portion 2653 are provided with the leg-shield-lower-inclined portion 265a. Alternatively, the leg-shield-inclined portion may be provided only one of the leg-shield-left portion or the leg-shield-right portion or may not be provided in any of the leg-shield-left portion and the leg-shield-right portion.

In the embodiment, the maximum dimension of the leg shield 265 in the left-right direction is larger than the tread width between the left front wheel 31 and the right front wheel 32. Alternatively, the maximum dimension of the leg shield in the left-right direction may be equal to or smaller than the tread width between the left front wheel and the right front wheel.

In the embodiment, the width of each of the front-portion-vehicle-body cover 267 and the linkage-mechanism-support part 22 in the left-right direction is smaller than the width of the leg-shield-intermediate portion 2651 in the left-right direction when the leaning vehicle 1 is seen toward the rear. Alternatively, the length of the front-portion-vehicle-body cover in the left-right direction may be larger than the width of the leg-shield-intermediate portion in the left-right direction when the leaning vehicle is seen toward the rear. The length of the linkage-mechanism-support part in the left-right direction may be larger than the width of the leg-shield-intermediate portion in the left-right direction when the leaning vehicle is seen toward the rear.

In the embodiment, the front-portion-vehicle-body cover 267 covers at least the front portion and the upper portion of the linkage-mechanism-support part 22. Alternatively, the front-portion-vehicle-body cover may cover only the front portion of the linkage-mechanism-support part or only the upper portion of the linkage-mechanism-support part. The front-portion-vehicle-body cover may cover a side portion of the linkage-mechanism-support part. The linkage-mechanism-support part may not be covered with the front-portion-vehicle-body cover.

In the embodiment, the leg shield 265 includes the light transmitting part 266 through which the driver seated on the seat surface 27c of the seat 27 can visually recognize at least a part of the left front wheel 31 and at least a part of the right front wheel 32 directly. Alternatively, the leg shield may include a light transmitting part through which the driver seated on the seat surface of the seat can visually recognize at least a part of the left front wheel and at least a part of the right front wheel indirectly. In this case, the driver seated on the seat surface of the seat uses an optical part such as a mirror provided in the leaning vehicle to visually recognize at least a part of the left front wheel and at least a part of the right front wheel through the light transmitting part indirectly.

The driver can more intuitively recognize the left front wheel and the right front wheel in the case where the driver seated on the seat surface of the seat can visually recognize at least a part of the left front wheel and at least a part of the right front wheel directly through the light transmitting part as in this embodiment than in the case where the driver visually recognizes at least a part of the left front wheel and at least a part of the right front wheel indirectly.

In the embodiment, the seat 27 includes the seat portion 27a and the seat back 27b. Alternatively, the seat may be a so-called straddled type seat including only a seat portion.

In the embodiment, the handlebar support part 25 is provided separately from the front framework part 211. Alternatively, the handlebar support part may be integrally provided with the front framework part. That is, the handlebar support part may be integrally provided with the main framework part.

In the embodiment, the main framework part 21a includes the front framework part 211 and the rear framework part 212. Alternatively, the main framework part may include at least a part of a casing of the power unit, in addition to the front framework part and the rear framework part.

In the embodiment, the vehicle body frame 21 includes the main framework part 21a linearly extending in the front-rear direction and the handlebar support part 25. The vehicle body frame 21 of this embodiment, however, is an example of the vehicle body frame. The vehicle body frame may include a framework part and a handlebar support part having configurations different from those of the embodiment. The vehicle body frame may include a head pipe supported by the framework part and rotatably supporting the steering shaft, instead of the handlebar support part.

In the embodiment, the handlebar support part 25 is formed in a tower shape by plate-shaped bar members. Alternatively, the handlebar support part may be constituted by pipe members or plate-shaped members as long as the handlebar support part can rotatably support the steering handle.

In the embodiment, the linkage mechanism 5 is the double wishbone-type linkage mechanism. Alternatively, the linkage mechanism may be a linkage mechanism of another type, such as a parallelogram linkage type.

In the case where the linkage mechanism is of a parallelogram linkage type, the linkage mechanism includes a pair of cross members disposed in the top-bottom direction and extending in the left-right direction in parallel with each other, a left side member extending in the top-bottom direction and connecting the left ends of the pair of cross members to each other, and a right side member extending in the top-bottom direction and connecting the right ends of the pair of cross members to each other. Center portions of the pair of cross members in the longitudinal direction are rotatably connected to the linkage-mechanism-support part. The left side member is connected to the left front wheel. The right side member is connected to the right front wheel.

In the embodiment, the main framework part 21a includes the front framework part 211 and the rear framework part 212. Alternatively, the main framework part may be one unit, or may be constituted by coupling three or more members in the front-rear direction. The main framework part may be constituted by coupling a plurality of parts in the left-right direction. The main framework part may be constituted by using pipe members.

In the embodiment, a rear portion of the front framework part 211 is lower than a front portion of the front framework part 211. Alternatively, the front framework part may have a uniform height in the front-rear direction, or may have a front portion lower than a rear portion thereof.

In the embodiment, the dimension of the rear framework part 212 in the left-right direction is smaller than the dimension of the front framework part 211 in the left-right direction, and the height of the rear framework part 212 is larger than the height of the front framework part 211. Alternatively, the dimension of the rear framework part in the left-right direction may be equal to or larger than the dimension of the front framework part in the left-right direction. The height of the rear framework part may be equal to or smaller than the height of the front framework part.

In the embodiment, the vehicle body frame 21 includes the linkage-mechanism-support part 22 as a vehicle-main-body-front portion located further forward than the leg shield 265. Alternatively, the vehicle body frame may include another component located further forward than the leg shield, as the vehicle-main-body-front portion. Although the linkage-mechanism-support part 22 of this embodiment is covered with the front-portion-vehicle-body cover 267, the vehicle-main-body-front portion may not be covered with a cover.

In the embodiment, although the leaning vehicle 1 is a front-wheel-steering vehicle, the leaning vehicle may be a rear-wheel-steering vehicle.

In the embodiment, the three-wheeled vehicle has been described as an example of the leaning vehicle, but the leaning vehicle may be a four-wheeled vehicle or a vehicle other than the three-wheeled vehicle.

### Reference Signs List

- 1: leaning vehicle
- 2: vehicle main body
- 3: front wheel
- 4: rear wheel
- 5: linkage mechanism
- 6: steering mechanism
- 7: buffer device
- 8: power unit (driving source)
- 21: vehicle body frame
- 21a: main framework part
- 211: front framework part
- 211a: front-framework-side-wall portion
- 211b: front-framework-bottom-wall portion
- 212: rear framework part
- 22: linkage-mechanism-support part
- 23: rear arm
- 24: rear-arm-support part
- 25: handlebar support part
- 26: vehicle body cover
- 26a: vehicle-body-cover-main body
- 26b: upper cover
- 261: left step
- 262: right step
- 264: motor cover
- 264a: opening
- 265: leg shield
- 265a: leg-shield-lower-inclined portion
- 2651: leg-shield-intermediate portion
- 2651a: leg-shield-intermediate-left-wall portion
- 2651b: leg-shield-intermediate-right-wall portion
- 2651c: leg-shield-intermediate-front-wall portion
- 2652: leg-shield-left portion
- 2652a: leg-shield-left-inclined portion
- 2653: leg-shield-right portion
- 2653a: leg-shield-right-inclined portion
- 266: light transmitting part
- 267: front-portion-vehicle-body cover
- 27: seat
- 27a: seat portion
- 27b: seat back
- 27c: seat surface
- 28: buffer-device-support part
- 28a: buffer-device-support-main-body portion
- 28b: tower portion
- 31: left front wheel
- 32: right front wheel
- 51: left arm mechanism
- 511: left-upper-arm member
- 512: left-lower-arm member
- 513: left knuckle
- 52: right arm mechanism
- 521: right-upper-arm member
- 522: right-lower-arm member
- 523: right knuckle
- 55: linkage-mechanism-driving motor (lean actuator)
- 55a: motor front portion
- 55b: motor left portion
- 55c: motor right portion
- 56: output shaft
- 61: bar handle
- 62: steering shaft
- 63: steering-shaft-support part
- 71: left buffer device
- 72: right buffer device
- C: cabin
- P: steering axis

## Claims

1. A leaning vehicle (1) configured to lean leftward when turning to the left and lean rightward when turning to the right, comprising:
a vehicle main body (2);
a left front wheel (31) located at the left of the vehicle main body (2);
a right front wheel (32) located at the right of the vehicle main body (2);
a linkage mechanism (5) located between the left front wheel (31) and the right front wheel (32) and supporting the left front wheel (31) and the right front wheel (32) such that the left front wheel (31) and the right front wheel (32) are movable upward or downward relative to the vehicle main body (2); and
a lean actuator (55) at least partially located further rearward than the linkage mechanism (5) when the vehicle is seen in a left-right direction, at least a part of the lean actuator (55) being located between the left front wheel (31) and the right front wheel (32) when the vehicle is seen toward rear, the lean actuator (55) being connected to the linkage mechanism (5) such that the left front wheel (31) and the right front wheel (32) are movable upward or downward relative to the vehicle main body (2),
**characterised in that** wherein , the leaning vehicle (1) comprises
a leg shield (265) located further rearward than the left front wheel (31) and the right front wheel (32), at least a portion of the leg shield (265) being located between each of the left and right front wheels (31, 32), and a leg of a driver,
wherein a leg-shield-intermediate portion (2651) located in an intermediate portion of the leg shield (265) in the left-right direction
projects further forward than a leg-shield-left portion (2652) and a leg-shield-right portion (2653), the leg-shield-left portion (2652) being located further leftward than the leg-shield-intermediate portion (2651), the leg-shield-right portion (2653) being located further rightward than the leg-shield-intermediate portion (2651), and
covers at least a part of a lean-actuator-left portion (55b) and a lean-actuator-right portion (55c), the lean-actuator-left portion (55b) being a left portion of the lean actuator (55), the lean-actuator-right portion (55c) being a right portion of the lean actuator (55).

2. The leaning vehicle (1) according to claim 1, further comprising
a front-portion-vehicle-body cover (267) covering a vehicle-main-body-front portion (22), the vehicle-main-body-front portion (22) being located further forward than the leg shield (265) in the vehicle main body (2), wherein
a width of the leg-shield-intermediate portion (2651) in the left-right direction is larger than a width of the vehicle-main-body-front portion (22) or the front-portion-vehicle-body cover (267) in the left-right direction.

3. The leaning vehicle (1) according to claim 1 or 2, wherein
at least one of the leg-shield-left portion (2652) or the leg-shield-right portion (2653) includes a leg-shield-lower-inclined portion (265a) located rearward toward a lower edge of corresponding one of the leg-shield-left portion (2652) or the leg-shield-right portion (2653).

4. The leaning vehicle (1) according to any one of claims 1 to 3, wherein
a width of a front portion of the leg-shield-intermediate portion (2651) in the left-right direction gradually decreases toward a lower edge of the leg-shield-intermediate portion (2651).

5. The leaning vehicle (1) according to any one of claims 1 to 4, wherein
a width of the leg-shield-intermediate portion (2651) in the left-right direction gradually increases toward a rear end of the leg-shield-intermediate portion (2651).

6. The leaning vehicle (1) according to any one of claims 1 to 5, wherein
the leg-shield-left portion (2652) includes a leg-shield-left-inclined portion (2652a) located rearward toward a left edge of the leg-shield-left portion (2652), and
the leg-shield-right portion (2653) includes a leg-shield-right-inclined portion (2653a) located rearward toward a right edge of the leg-shield-right portion (2653).

7. The leaning vehicle (1) according to any one of claims 1 to 6, wherein
a center portion of the leg-shield-intermediate portion (2651) in a top-bottom direction covers at least a part of the lean-actuator-left portion (55b) and the lean-actuator-right portion (55c).

8. The leaning vehicle (1) according to any one of claims 1 to 7, wherein
the left front wheel (31) and the right front wheel (32) are steering wheels.

## Patentansprüche

1. Ein Neigungsfahrzeug (1), das dazu konfiguriert ist, sich beim Linksfahren nach links zu neigen und sich beim Rechtsfahren nach rechts zu neigen, wobei dasselbe folgende Merkmale aufweist:
einen Fahrzeughauptkörper (2);
ein linkes Vorderrad (31), das auf der linken Seite des Fahrzeughauptkörpers (2) angeordnet ist;
ein rechtes Vorderrad (32), das auf der rechten Seite des Fahrzeughauptkörpers (2) angeordnet ist;
einen Verbindungsmechanismus (5), der zwischen dem linken Vorderrad (31) und dem rechten Vorderrad (32) angeordnet ist und der das linke Vorderrad (31) und das rechte Vorderrad (32) derart lagert, dass das linke Vorderrad (31) und das rechte Vorderrad (32) nach oben und nach unten relativ zu dem Fahrzeughauptkörper (2) beweglich sind; und
einen Neigungsaktor (55), der zumindest teilweise weiter hinten als der Verbindungsmechanismus (5) angeordnet ist, wenn das Fahrzeug in einer Links-Rechts-Richtung betrachtet wird, wobei zumindest ein Teil des Neigungsaktors (55) zwischen dem linken Vorderrad (31) und dem rechten Vorderrad (32) angeordnet ist, wenn das Fahrzeug nach hinten betrachtet wird, wobei der Neigungsaktor (55) mit dem Verbindungsmechanismus (5) derart verbunden ist, dass das linke Vorderrad (31) und das rechte Vorderrad (32) nach oben und nach unten relativ zu dem Fahrzeugkörper (2) beweglich sind,
**dadurch gekennzeichnet, dass** das Neigungsfahrzeug (1) Folgendes aufweist:
einen Beinschutz (265) aufweist, der weiter hinten als das linke Vorderrad (31) und das rechte Vorderrad (32) angeordnet ist, wobei zumindest ein Abschnitt des Beinschutzes (265) zwischen dem linken und dem rechten Vorderrad (31, 32) sowie einem Bein des Fahrers angeordnet ist,
wobei ein Beinschutzzwischenabschnitt (2651), der in einer Zwischenposition des Beinschutzes (265) in der Links-Rechts-Richtung angeordnet ist,
weiter nach vorne hervorsteht als ein linker Beinschutzabschnitt (2652) und ein rechter Beinschutzabschnitt (2653), wobei der linke Beinschutzabschnitt (2652) weiter links angeordnet ist als der Beinschutzzwischenabschnitt (2651), wobei der rechte Beinschutzabschnitt (2653) weiter rechts angeordnet ist als der Beinschutzzwischenabschnitt (2651), und
zumindest ein Teil eines linken Neigungsaktorabschnitts (55b) und eines rechten Neigungsaktorabschnitts (55c) abdeckt, wobei der linke Neigungsaktorabschnitt (55b) ein linker Abschnitt des Neigungsaktors (55) ist, wobei der rechte Neigungsaktorabschnitt (55c) ein rechter Abschnitt des Neigungsaktors (55) ist.

2. Das Neigungsfahrzeug (1) gemäß Anspruch 1, das ferner folgende Merkmale aufweist:
eine Vorderabschnittfahrzeugkörperabdeckung (267), die einen Fahrzeughauptkörpervorderabschnitt (22) abdeckt, wobei der Fahrzeughauptkörpervorderabschnitt (22) weiter vorne angeordnet ist als der Beinschutz (265) in dem Fahrzeughauptkörper (2), wobei
eine Breite des Beinschutzzwischenabschnitts (2651) in der Links-Rechts-Richtung größer ist als eine Breite des Fahrzeughauptkörpervorderabschnitts (22) oder der Vorderabschnittfahrzeugkörperabdeckung (267) in der Links-Rechts-Richtung.

3. Das Neigungsfahrzeug (1) gemäß Anspruch 1 oder 2, wobei
zumindest einer des linken Beinschutzabschnitts (2652) oder des rechten Beinschutzabschnitts (2653) einen unteren geneigten Beinschutzabschnitt (265a) umfasst, der nach hinten hin zu einem unteren Rand eines entsprechenden des linken Beinschutzabschnitts (2652) oder des rechten Beinschutzabschnitts (2653) angeordnet ist.

4. Das Neigungsfahrzeug (1) gemäß einem der Ansprüche 1 bis 3, wobei
eine Breite eines vorderen Abschnitts des Beinschutzzwischenabschnitts (2651) in der Links-Rechts-Richtung schrittweise hin zu einem unteren Rand des Beinschutzzwischenabschnitts (2651) abnimmt.

5. Das Neigungsfahrzeug (1) gemäß einem der Ansprüche 1 bis 4, wobei
eine Breite des Beinschutzzwischenabschnitts (2651) in der Links-Rechts-Richtung schrittweise zu einem hinteren Ende des Beinschutzzwischenabschnitts (2651) zunimmt.

6. Das Neigungsfahrzeug (1) gemäß einem der Ansprüche 1 bis 5, wobei
der linke Beinschutzabschnitt (2652) einen linken geneigten Beinschutzabschnitt (2652a) umfasst, der nach hinten hin zu einem linken Rand des linken Beinschutzabschnitts (2652) angeordnet ist, und
der rechte Beinschutzabschnitt (2653) einen rechten geneigten Beinschutzabschnitt (2653a) umfasst, der nach hinten hin zu einem rechten Rand des rechten Beinschutzabschnitts (2653) angeordnet ist.

7. Das Neigungsfahrzeug (1) gemäß einem der Ansprüche 1 bis 6, wobei
ein mittlerer Abschnitt des Beinschutzzwischenabschnitts (2651) in einer Oben-Unten-Richtung zumindest einen Teil des linken Neigungsaktorabschnitts (55b) und des rechten Neigungsaktorabschnitts (55c) abdeckt.

8. Das Neigungsfahrzeug (1) gemäß einem der Ansprüche 1 bis 7, wobei
das linke Vorderrad (31) und das rechte Vorderrad (32) Lenkräder sind.

## Revendications

1. Véhicule à inclinaison (1) configuré pour s'incliner vers la gauche lors d'un virage à gauche et pour s'incliner vers la droite lors d'un virage à droite, comprenant:
un corps principal de véhicule (2);
une roue avant gauche (31) située à la gauche du corps principal de véhicule (2);
une roue avant droite (32) située à la droite du corps principal de véhicule (2);
un mécanisme de liaison (5) situé entre la roue avant gauche (31) et la roue avant droite (32) et supportant la roue avant gauche (31) et la roue avant droite (32) de sorte que la roue avant gauche (31) et la roue avant droite (32) puissent se déplacer vers le haut ou vers le bas par rapport au corps principal de véhicule (2); et
un actionneur d'inclinaison (55) situé au moins partiellement plus vers l'arrière que le mécanisme de liaison (5) lorsque le véhicule est vu dans une direction gauche-droite, au moins une partie de l'actionneur d'inclinaison (55) étant située entre la roue avant gauche (31) et la roue avant droite (32) lorsque le véhicule est vu vers l'arrière, l'actionneur d'inclinaison (55) étant connecté au mécanisme de liaison (5) de sorte que la roue avant gauche (31) et la roue avant droite (32) puissent se déplacer vers le haut ou vers le bas par rapport au corps principal de véhicule (2),
**caractérisé par le fait que** le véhicule à inclinaison (1) comprend
un protège-jambes (265) situé plus vers l'arrière que la roue avant gauche (31) et la roue avant droite (32), au moins une partie du protège-jambes (265) étant située entre chacune des roues avant gauche et droite (31, 32) et une jambe d'un conducteur,
dans lequel une partie intermédiaire du protège-jambes (2651) située dans une partie intermédiaire du protège-jambes (265) dans la direction gauche-droite
ressort plus vers l'avant qu'une partie gauche du protège-jambes (2652) et qu'une partie droite du protège-jambes (2653), la partie gauche du protège-jambes (2652) étant située plus à gauche que la partie intermédiaire du protège-jambes (2651), la partie droite du protège-jambes (2653) étant située plus à droite que la partie intermédiaire du protège-jambes (2651), et
recouvre au moins une partie d'une partie gauche de l'actionneur d'inclinaison (55b) et d'une partie droite de l'actionneur d'inclinaison (55c), la partie gauche de l'actionneur d'inclinaison (55b) étant une partie gauche de l'actionneur d'inclinaison (55), la partie droite de l'actionneur d'inclinaison (55c) étant une partie droite de l'actionneur d'inclinaison (55).

2. Véhicule à inclinaison (1) selon la revendication 1, comprenant par ailleurs
un couvercle de partie avant de carrosserie de véhicule (267) recouvrant une partie avant de la carrosserie principale de véhicule (22), la partie avant de carrosserie principale de véhicule (22) étant située plus vers l'avant que le protège-jambes (265) dans la carrosserie principale de véhicule (2),
dans lequel
une largeur de la partie intermédiaire du protège-jambes (2651) dans la direction gauche-droite est plus grande qu'une largeur de la partie avant de la carrosserie principale de véhicule (22) ou du couvercle de partie avant de la carrosserie de véhicule (267) dans la direction gauche-droite.

3. Véhicule à inclinaison (1) selon la revendication 1 ou 2, dans lequel
au moins l'une parmi la partie gauche du protège-jambes (2652) ou la partie droite du protège-jambes (2653) comporte une partie inclinée inférieure du protège-jambe (265a) située vers l'arrière vers un bord inférieur de l'une correspondante parmi la partie gauche du protège-jambes (2652) ou la partie droite du protège-jambes (2653).

4. Véhicule à inclinaison (1) selon l'une quelconque des revendications 1 à 3, dans lequel
une largeur d'une partie avant de la partie intermédiaire du protège-jambes (2651) dans la direction gauche-droite diminue progressivement vers un bord inférieur de la partie intermédiaire du protège-jambes (2651).

5. Véhicule à inclinaison (1) selon l'une quelconque des revendications 1 à 4, dans lequel
une largeur de la partie intermédiaire du protège-jambes (2651) dans la direction gauche-droite augmente progressivement vers une extrémité arrière de la partie intermédiaire du protège-jambes (2651).

6. Véhicule à inclinaison (1) selon l'une quelconque des revendications 1 à 5, dans lequel
la partie gauche du protège-jambes (2652) comporte une partie inclinée vers la gauche du protège-jambes (2652a) située à l'arrière vers un bord gauche de la partie gauche du protège-jambes (2652), et
la partie droite de protège-jambes (2653) comporte une partie inclinée vers la droite du protège-jambes (2653a) située à l'arrière vers un bord droit de la partie droite du protège-jambes (2653).

7. Véhicule à inclinaison (1) selon l'une quelconque des revendications 1 à 6, dans lequel
une partie centrale de la partie intermédiaire du protège-jambes (2651) dans une direction de haut en bas recouvre au moins une partie de la partie gauche de l'actionneur d'inclinaison (55b) et de la partie droite de l'actionneur d'inclinaison (55c).

8. Véhicule à inclinaison (1) selon l'une quelconque des revendications 1 à 7, dans lequel
la roue avant gauche (31) et la roue avant droite (32) sont des roues de direction.
